# EUROPÄISCHE PATENTSCHRIFT

(11) **EP 4 529 503 B1**
(45) Veröffentlichungstag und Bekanntmachung des Hinweises auf die Patenterteilung: **04.02.2026**
(21) Anmeldenummer: 23727825.4
(22) Anmeldetag: 15.05.2023
(51) Int. Cl.: B27B 5/32, B27G 19/04

(54) **WERKZEUGMASCHINENVORRICHTUNG, WERKZEUGMASCHINE UND SYSTEM**
MACHINE TOOL DEVICE, MACHINE TOOL AND SYSTEM
DISPOSITIF DE MACHINE-OUTIL, MACHINE-OUTIL ET SYSTÈME

(30) Priorität: 23.05.2022 DE 102022205094
(43) Veröffentlichungstag der Anmeldung: 02.04.2025
(73) Patentinhaber: Robert Bosch GmbH, 70442 Stuttgart (DE)
(72) Erfinder: RAMEZANIAN, Houman, 5408 Enntbaden (CH); DELFINI, Stefano, 2544 Bettlach (CH); SCHNELL, Pascal, 4252 Bärschwil (CH)
(86) Internationale Anmeldenummer: PCT/EP2023/062905
(87) Internationale Veröffentlichungsnummer: WO 2023/227401

(56) Entgegenhaltungen:
- EP-A1- 1 859 899

## Beschreibung

### Stand der Technik

Es ist bereits eine Werkzeugmaschinenvorrichtung mit einer Spanneinheit zur Fixierung eines Werkzeugs, mit einer Schutzhaube, welche einen Werkzeugaufnahmebereich für das Werkzeug zumindest teilweise umgibt, und mit einer Betätigungseinheit zur Betätigung der Spanneinheit vorgeschlagen worden.

Als Stand der Technik wurde zudem die EP 1 859 899 A1 recherchiert.

### Offenbarung der Erfindung

Die Erfindung geht aus von einer Werkzeugmaschinenvorrichtung, insbesondere einer Handkreissägenvorrichtung, mit einer Spanneinheit zur Fixierung eines Werkzeugs, insbesondere eines Kreissägeblatts, mit einer Schutzhaube, welche einen Werkzeugaufnahmebereich für das Werkzeug zumindest teilweise umgibt, und mit einer Betätigungseinheit zur Betätigung der Spanneinheit.

Es wird vorgeschlagen, dass die Werkzeugmaschinenvorrichtung eine Sicherungseinheit umfasst, welche die Betätigungseinheit bei zumindest teilweise geöffneter Schutzhaube blockiert. Vorteilhaft kann eine Werkzeugmaschinenvorrichtung mit einer besonders hohen Bediensicherheit zur Verfügung gestellt werden. Vorteilhaft kann einem unbeabsichtigten Betätigen der Betätigungseinheit zu einem Lösen des Werkzeugs von der Spanneinheit entgegengewirkt werden. Vorteilhaft kann einem Herunterfallen des Werkzeugs beim Lösen der Spanneinheit entgegengewirkt werden. Vorteilhaft kann ein besonders geringes Verletzungsrisiko für einen Nutzer erreicht werden. Vorteilhaft kann das Werkzeug schnell und einfach bei gleichzeitig besonders hoher Nutzersicherheit gewechselt werden. Die Sicherungseinheit ist vorzugsweise mechanisch ausgebildet. Vorzugsweise ist die Betätigungseinheit durch die Sicherungseinheit, insbesondere automatisch, in Abhängigkeit von einer Schutzhaubenstellung der Schutzhaube blockiert oder freigegeben. Die Sicherungseinheit ist bevorzugt in Abhängigkeit von der Schutzhaubenstellung, insbesondere automatisch, betätigbar. Insbesondere gibt die Sicherungseinheit eine Betätigung der Betätigungseinheit bei geschlossener Schutzhaube, vorzugsweise automatisch, frei. Die Schutzhaubenstellung gibt insbesondere an, ob die Schutzhaube zumindest teilweise geöffnet ist oder geschlossen ist. Alternativ ist auch denkbar, dass die Sicherungseinheit zumindest teilweise elektrisch ausgebildet ist. Beispielsweise ist denkbar, dass die Sicherungseinheit eine Erfassungseinheit zur Erfassung einer Schutzhaubenstellung aufweist. Die Erfassungseinheit kann beispielsweise einen mechanischen Sensor, einen optischen Sensor, oder einen anderen, einem Fachmann als sinnvoll erscheinenden Sensor zur Erfassung der Schutzhaubenstellung umfassen. Es ist denkbar, dass die Sicherungseinheit eine Steuereinheit umfasst, welche insbesondere dazu eingerichtet ist, ein Signal der Erfassungseinheit auszuwerten und in Abhängigkeit davon die Betätigungseinheit zu blockieren oder freizugeben. Die Steuereinheit umfasst insbesondere zumindest einen Prozessor und ein Speicherelement sowie ein auf dem Speicherelement gespeichertes Betriebsprogramm. Das Speicherelement ist vorzugsweise als digitales Speichermedium, beispielsweise als eine Festplatte oder dergleichen ausgebildet. Es ist auch denkbar, dass die Steuereinheit der Sicherungseinheit von einer Steuereinheit der Werkzeugmaschine gebildet ist.

Die Spanneinheit ist insbesondere werkzeuglos bedienbar, bevorzugt mittels der Betätigungseinheit. Die Spanneinheit ist bevorzugt fest, insbesondere drehfest, an einer Werkzeugmaschine, insbesondere an einer Abtriebsspindel einer Abtriebseinheit der Werkzeugmaschine, angeordnet. Alternativ ist denkbar, dass die Spanneinheit lösbar an der Werkzeugmaschine, insbesondere an der Abtriebsspindel, angeordnet ist. Die Spanneinheit ist vorzugsweise zu einer, insbesondere werkzeuglosen, Befestigung des Werkzeugs an der Werkzeugmaschinenvorrichtung vorgesehen. Unter "vorgesehen" soll speziell eingerichtet, speziell ausgelegt und/oder speziell ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt. Vorzugsweise ist das Werkzeug, insbesondere in einem an der Spanneinheit fixierten Zustand rotierend oder oszillierend antreibbar, insbesondere um eine Rotationsachse einer Verbindungsschnittstelle des Werkzeugs. Bevorzugt ist das Werkzeug, insbesondere in einem mittels der Spanneinheit an der Werkzeugmaschine fixierten Zustand, vorzugsweise rotierend oder oszillierend, durch die Abtriebsspindel antreibbar. Die Spanneinheit weist, insbesondere betrachtet in einer sich zumindest im Wesentlichen senkrecht zu einer Abtriebsachse der Abtriebsspindel erstreckenden Ebene, eine Außenkontur auf, die korrespondierend ausgebildet ist, mit einer Kontur der Verbindungsschnittstelle. Unter "m Wesentlichen senkrecht" kann eine Ausrichtung einer Richtung relativ zu einer Bezugsrichtung verstanden werden, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Die Kontur der Verbindungsschnittstelle ergibt sich insbesondere durch einen Verlauf einer inneren Begrenzungskontur und einer äußeren Begrenzungskontur der Verbindungsschnittstelle. Die Abtriebsachse verläuft vorzugsweise in einem an der Spanneinheit fixierten Zustand des Werkzeugs zumindest im Wesentlichen parallel zu der Rotationsachse der Verbindungsschnittstelle.

Vorzugsweise ist die Abtriebseinheit dazu vorgesehen, eine Rotations- und/oder Oszillationsbewegung um die Abtriebsachse auf das mittels der Spanneinheit an der Abtriebseinheit fixierte Werkzeug zu übertragen. Vorzugsweise ist die Abtriebseinheit wirkungsmäßig auf eine, einem Fachmann bereits bekannte Art und Weise mit einer Antriebseinheit der Werkzeugmaschine verbunden, insbesondere über zumindest ein Antriebsritzel der Antriebseinheit. Die Abtriebseinheit umfasst insbesondere zumindest eine Hülse und/oder zumindest eine Hohlwelle, insbesondere eine Hohlspindel, die die Abtriebsspindel bildet. Die Rotations- und/oder Oszillationsbewegung der Abtriebseinheit ist vorzugsweise infolge eines Zusammenwirkens der Abtriebseinheit mit der Antriebseinheit der Werkzeugmaschine, welche zumindest einen Elektromotor umfasst, erzeugbar.

Gemäß einer vorteilhaften Weiterbildung wird vorgeschlagen, dass die Betätigungseinheit ein Bedienelement aufweist, welches zu einer Betätigung zumindest teilweise entlang der Schutzhaube bewegbar ist. Durch diese Ausgestaltung der Werkzeugmaschinenvorrichtung kann vorteilhaft ein Werkzeug besonders einfach und schnell aus einem an der Spanneinheit fixierten Zustand gelöst werden. Vorteilhaft kann ein Werkzeug besonders komfortabel und zeitsparend gewechselt werden. Vorteilhaft kann ein besonders schneller Arbeitsablauf gewährleistet werden. Vorteilhaft kann eine besonders platzsparende und gleichzeitig sichere Betätigung des Bedienelements erreicht werden. Vorteilhaft kann eine Betätigungseinheit, insbesondere ein Bedienelement, zur Verfügung gestellt werden, welche/s in besonders kompakter Weise bedienbar ist. Somit kann vorteilhaft einer Beschädigung der Betätigungseinheit, insbesondere des Bedienelements, konstruktiv besonders einfach und effektiv entgegengewirkt werden. Vorteilhaft kann eine besonders ergonomische Betätigung der Betätigungseinheit, insbesondere des Bedienelements, erreicht werden. Vorteilhaft kann einer Verletzung eines Bedieners bei einer Bedienung der Betätigungseinheit entgegengewirkt werden. Das Bedienelement ist insbesondere zu einer manuellen Betätigung durch einen Nutzer vorgesehen. Vorzugsweise ist das Bedienelement durch eine Drehung um eine Bedienelementdrehachse entlang der Schutzhaube bewegbar. Bevorzugt ist das Bedienelement zur Betätigung zumindest im Wesentlichen parallel zu einer Oberfläche, insbesondere Außenfläche, der Schutzhaube bewegbar. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Bevorzugt umfasst die Betätigungseinheit zumindest einen Hebelarm, mittels welchem insbesondere das Bedienelement um die Bedienelementdrehachse bewegbar ist. Das Bedienelement ist vorzugsweise drehbar an einem Teil der Schutzhaube gelagert, bevorzugt mittels des Hebelarms. Es ist alternativ auch denkbar, dass das Bedienelement, insbesondere der Hebelarm, an einem Gehäuseelement der Werkzeugmaschine, welches insbesondere verschieden ist von der Schutzhaube, oder dergleichen bewegbar, bevorzugt drehbar, gelagert ist. Das Bedienelement ist vorzugsweise beabstandet zu der Schutzhaube angeordnet. Das Bedienelement ist zur Betätigung vorzugsweise in gleichbleibendem Abstand zu der Schutzhaube zumindest teilweise entlang der Schutzhaube bewegbar. Alternativ ist jedoch auch denkbar, dass das Bedienelement an der Schutzhaube anliegt, vorzugsweise durch die Schutzhaube, insbesondere die dem Bedienelement zugewandte Oberfläche der Schutzhaube, bei einer Bewegung entlang der Schutzhaube führbar ist. Vorzugsweise ist zur Lösung des Werkzeugs aus einem an der Spanneinheit fixierten Zustand lediglich das eine Bedienelement zu betätigen.

Weiterhin wird vorgeschlagen, dass das Bedienelement um eine Bedienelementdrehachse bewegbar ist, wobei durch eine Bewegung des Bedienelements um die Bedienelementdrehachse eine zur Bedienelementdrehachse zumindest im Wesentlichen parallel verlaufende Bewegung eines Betätigungselements der Spanneinheit erzeugbar ist. Die Bedienelementdrehachse verläuft insbesondere zumindest im Wesentlichen parallel zu der Abtriebsachse der Abtriebsspindel und/oder der Rotationsachse der Verbindungsschnittstelle des Werkzeugs in einem an der Spanneinheit fixierten Zustand des Werkzeugs. Eine Bewegung des Bedienelements zur Betätigung der Spanneinheit verläuft vorzugsweise in einer Ebene, welche zumindest im Wesentlichen senkrecht zu der Abtriebsachse und/oder der Rotationsachse des Werkzeugs in einem an der Spanneinheit fixierten Zustand des Werkzeugs verläuft. Das Betätigungselement ist beispielsweise als ein Bolzen, als ein Stift oder als ein anderes, einem Fachmann als sinnvoll erscheinendes Betätigungselement ausgebildet. Die Spanneinheit weist vorzugsweise zumindest zwei Zustände, insbesondere einen Lösezustand und einen Befestigungszustand, auf. Im Lösezustand ist das Werkzeug vorzugsweise von der Spanneinheit, insbesondere aus einer Montageposition an der Spanneinheit, abnehmbar oder in der Montageposition an der Spanneinheit anordenbar. Im Befestigungszustand ist das Werkzeug in einem an der Spanneinheit angeordneten Zustand, insbesondere in der Montageposition, an der Spanneinheit fixiert. Durch eine Bewegung des Betätigungselements der Spanneinheit ist die Spanneinheit insbesondere von dem Befestigungszustand in den Lösezustand überführbar oder von dem Lösezustand in den Befestigungszustand überführbar. Vorteilhaft kann eine besonders ergonomisch zu bedienende Anordnung der Betätigungseinheit realisiert werden. Vorteilhaft kann ein besonders hoher Bedienkomfort erreicht werden.

Des Weiteren wird vorgeschlagen, dass die Betätigungseinheit ein rampenförmiges Betätigungsmittel aufweist. Das Betätigungsmittel ist insbesondere dazu vorgesehen, mit dem Betätigungselement der Spanneinheit zur Betätigung der Spanneinheit zusammenzuwirken. Vorzugsweise ist das Betätigungsmittel dazu vorgesehen, die Bewegung des Bedienelements, insbesondere über den Hebelarm, auf das Betätigungselement der Spanneinheit zu übertragen. Bevorzugt ist das Betätigungsmittel an dem Hebelarm angeordnet. Das Betätigungsmittel ist bevorzugt über den Hebelarm mit dem Bedienelement verbunden. Bevorzugt ist das Betätigungsmittel an dem Hebelarm befestigt, insbesondere drehfest, beispielsweise mittels einer Schraubverbindung, einer Rastverbindung oder dergleichen. Es ist denkbar, dass der Hebelarm einteilig oder mehrteilig ausgebildet ist. Alternativ ist denkbar, dass das Betätigungsmittel zumindest teilweise einstückig mit dem Hebelarm ausgebildet ist. Darunter, dass "zumindest eine Einheit oder ein Objekt, insbesondere der Hebelarm, und zumindest eine weitere Einheit oder ein weiteres Objekt, insbesondere das Betätigungsmittel, zumindest teilweise einstückig miteinander ausgebildet sind" soll insbesondere verstanden werden, dass zumindest ein Element der Einheit bzw. des Objekts einstückig mit zumindest einem weiteren Element der weiteren Einheit bzw. des weiteren Objekts ausgebildet ist. Unter "einstückig" kann zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Das Bedienelement ist vorzugsweise an dem Hebelarm befestigt, insbesondere drehfest, beispielsweise mittels einer Schraubverbindung, einer Rastverbindung oder dergleichen. Alternativ ist auch denkbar, dass das Bedienelement zumindest teilweise einstückig mit dem Hebelarm ausgebildet ist. Insbesondere sind das Betätigungsmittel und das Bedienelement an zueinander entgegengesetzten Enden des Hebelarms angeordnet. Vorteilhaft kann konstruktiv besonders einfach eine Bewegung des Bedienelements entlang der Schutzhaube in eine Bewegung zur Betätigung der Spanneinheit übertragen werden. Vorteilhaft kann ein besonders gleichmäßiges Lösen der Spanneinheit erreicht werden.

Außerdem wird vorgeschlagen, dass die Betätigungseinheit ein, insbesondere das zuvor bereits genannte, Betätigungsmittel aufweist, welches die Bedienelementdrehachse zumindest teilweise umgibt. Vorzugsweise umgibt das Betätigungsmittel die Bedienelementdrehachse in einem Winkelbereich von maximal 75°. Bevorzugt beträgt der Winkelbereich, in welchem das Betätigungsmittel die Bedienelementdrehachse umgibt, zumindest 20°. Vorteilhaft kann eine besonders komfortable und gleichmäßige Betätigung der Spanneinheit realisiert werden.

Ferner wird vorgeschlagen, dass durch einen Betätigungsweg des Bedienelements entlang der Schutzhaube von zumindest 40°, insbesondere um die Bedienelementdrehachse, die Spanneinheit lösbar ist. Bevorzugt ist die Spanneinheit durch einen Betätigungsweg des Bedienelements ausgehend von einer Endposition des Bedienelements im Befestigungszustand der Spanneinheit entlang der Schutzhaube von zumindest 40° lösbar. Alternativ ist jedoch auch denkbar, dass die Betätigungseinheit derart ausgebildet ist, dass der Betätigungsweg, insbesondere zum Lösen der Spanneinheit, vorzugsweise ausgehend von der Endposition des Bedienelements im Befestigungszustand der Spanneinheit, weniger als 40° beträgt. Vorzugsweise ist ein Betätigungsweg des Bedienelements ausgehend von einer Endposition des Bedienelements im Lösezustand der Spanneinheit zur Erzeugung des Befestigungszustands kleiner als der Betätigungsweg zur Erzeugung des Lösezustands ausgehend von der Endposition des Bedienelements im Befestigungszustand der Spanneinheit. Vorteilhaft kann die Spanneinheit besonders einfach und schnell gelöst werden, wobei insbesondere gleichzeitig einem unbeabsichtigten Lösen der Spanneinheit entgegengewirkt werden kann. Vorteilhaft kann ein Werkzeugwechsel besonders schnell und komfortabel durchgeführt werden. Vorteilhaft kann ein besonders hoher Betätigungskomfort beim Lösen der Spanneinheit erreicht werden.

Zudem wird vorgeschlagen, dass ein, insbesondere der zuvor bereits genannte, Betätigungsweg des Bedienelements entlang der Schutzhaube zur Betätigung der Spanneinheit maximal 75°, insbesondere um die Bedienelementdrehachse, beträgt. Vorzugsweise beträgt der Betätigungsweg des Bedienelements entlang der Schutzhaube zum Lösen der Spanneinheit maximal 75°, insbesondere um die Bedienelementdrehachse, vorzugsweise ausgehend von der Endposition des Bedienelements im Befestigungszustand der Spanneinheit. In einer alternativen Ausführung der Betätigungseinheit ist auch denkbar, dass der Betätigungsweg des Bedienelements entlang der Schutzhaube zur Betätigung der Spanneinheit, insbesondere zum Lösen der Spanneinheit aus dem Befestigungszustand, mehr als 75°, insbesondere um die Bedienelementdrehachse, beträgt, beispielsweise maximal 90°, vorzugsweise maximal 135°, besonders bevorzugt maximal 180°. Vorteilhaft kann die Spanneinheit besonders komfortabel und schnell gelöst werden. Vorteilhaft kann ein Platzbedarf zum Betätigen, insbesondere Lösen, der Spanneinheit besonders gering gehalten werden. Vorteilhaft kann eine besonders kompakte Betätigungseinheit zur Verfügung gestellt werden.

Weiterhin wird vorgeschlagen, dass der Betätigungsweg einen Leerweg von zumindest 20°, insbesondere um die Bedienelementdrehachse, aufweist. Insbesondere verläuft der Leerweg ausgehend von der Endposition des Bedienelements in dem Befestigungszustand der Spanneinheit. Insbesondere übt die Betätigungseinheit, vorzugsweise das Betätigungsmittel, lediglich in einem außerhalb des Leerwegs angeordneten Zustand des Bedienelements eine Betätigungswirkung, insbesondere eine Betätigungskraft, auf die Spanneinheit, insbesondere das Betätigungselement der Spanneinheit, aus. Die Spanneinheit, insbesondere das Betätigungselement, ist bevorzugt in einem innerhalb des Leerwegs angeordneten Zustand des Bedienelements frei von einer Betätigungswirkung, insbesondere einer Betätigungskraft, durch die Betätigungseinheit, insbesondere das Betätigungsmittel der Betätigungseinheit. Es ist denkbar, dass das Betätigungsmittel der Betätigungseinheit in einem innerhalb des Leerwegs angeordneten Zustand des Bedienelements beabstandet zu dem Betätigungselement der Spanneinheit angeordnet ist. Alternativ ist jedoch auch denkbar, dass das Betätigungsmittel der Betätigungseinheit in einem innerhalb des Leerwegs angeordneten Zustand des Bedienelements an dem Betätigungselement der Spanneinheit anliegt. Vorzugsweise liegt das Betätigungsmittel, insbesondere eine Kraftübertragungsfläche des Betätigungselements, zumindest in einem außerhalb des Leerwegs angeordneten Zustand des Bedienelements an dem Betätigungselement der Spanneinheit an. Vorzugsweise übt das Betätigungsmittel, insbesondere die Kraftübertragungsfläche des Betätigungselements, zumindest in einem außerhalb des Leerwegs angeordneten Zustand des Bedienelements eine Kraft auf das Betätigungselement der Spanneinheit zur Betätigung, insbesondere zum Lösen, der Spanneinheit aus. Vorteilhaft kann einem unbeabsichtigten Lösen der Spanneinheit durch die Betätigungseinheit konstruktiv einfach und effektiv entgegengewirkt werden. Vorteilhaft kann eine besonders hohe Arbeitssicherheit erreicht werden.

Des Weiteren wird vorgeschlagen, dass das Bedienelement in radialer Richtung betrachtet auf einer dem Werkzeugaufnahmebereich abgewandten Seite der Schutzhaube angeordnet ist. Die radiale Richtung bezieht sich insbesondere auf die Bedienelementdrehachse. Vorteilhaft kann eine Betätigungseinheit mit einer hinsichtlich einer Bediensicherheit besonders günstigen Anordnung des Bedienelements zur Verfügung gestellt werden. Vorteilhaft kann einem Greifen des Bedieners in den Werkzeugaufnahmebereich, insbesondere in das Werkzeug, entgegengewirkt werden. Vorteilhaft kann ein Verletzungsrisiko bei einem Bedienen des Bedienelements besonders gering gehalten werden. Vorteilhaft kann eine besonders komfortable Bedienung des Bedienelements erreicht werden.

Außerdem wird vorgeschlagen, dass das Bedienelement in einem, insbesondere dem zuvor bereits genannten, Befestigungszustand der Spanneinheit auf einer einer Bedienseite abgewandten Seite der Schutzhaube angeordnet ist. Vorzugsweise befindet sich ein Bediener zumindest in einem Betriebszustand auf der Bedienseite. Auf der Bedienseite ist vorzugsweise ein Haupthandgriff der Werkzeugmaschine, insbesondere der Werkzeugmaschinenvorrichtung, oder dergleichen angeordnet. Vorteilhaft kann durch die erfindungsgemäße Anordnung des Bedienelements einem unbeabsichtigten Betätigen, insbesondere Lösen, der Spanneinheit zumindest in einem Betriebszustand besonders einfach und effektiv entgegengewirkt werden.

Ferner wird vorgeschlagen, dass die Sicherungseinheit ein Sperrelement umfasst, wobei ein Schließen der Schutzhaube das Sperrelement in eine Entsperrposition bewegt. Das Sperrelement ist beispielsweise als ein Zapfen, als ein Haken, als ein rampenförmiges Element, oder als ein anderes, einem Fachmann als sinnvoll erscheinendes Sperrelement ausgebildet. Vorzugsweise ist die Betätigungseinheit in der Entsperrposition des Sperrelements betätigbar. Bevorzugt ist das Bedienelement in der Entsperrposition des Sperrelements entlang der Schutzhaube bewegbar. Insbesondere ist die Betätigungseinheit, bevorzugt das Bedienelement, in der Entsperrposition des Sperrelements frei von einem Eingriff, insbesondere einer Krafteinwirkung, durch die Sicherungseinheit, vorzugsweise das Sperrelement. Bevorzugt ist die Sicherungseinheit durch eine Bewegung zumindest eines Teils der Schutzhaube betätigbar. Insbesondere ist das Sperrelement durch eine Bewegung des zumindest einen Teils der Schutzhaube bewegbar. Vorzugsweise ist das Sperrelement durch eine Bewegung des zumindest einen Teils der Schutzhaube von einem Entsperrzustand in einen Sperrzustand und/oder von dem Sperrzustand in den Entsperrzustand bewegbar. Im Entsperrzustand befindet sich das Sperrelement insbesondere in der Entsperrposition. Im Sperrzustand befindet sich das Sperrelement insbesondere in einer Sperrposition. Bevorzugt ist das Sperrelement lediglich in einem geschlossenen Zustand der Schutzhaube in den Entsperrzustand bewegbar. Vorzugsweise ist die Sicherungseinheit derart ausgebildet, dass sich das Sperrelement in einem geöffneten Zustand der Schutzhaube automatisch in den Sperrzustand bewegt, beispielsweise mittels eines schwerkraftgesteuerten Mechanismus, mittels eines Federelements oder dergleichen. Vorteilhaft kann ein Schließen der Schutzhaube zum Entsperren der Sicherungseinheit genutzt werden. Vorteilhaft ist die Betätigungseinheit durch ein Schließen der Schutzhaube automatisch betätigbar. Vorteilhaft kann ein besonders hoher Bedienkomfort erreicht werden.

Zudem wird vorgeschlagen, dass die Sicherungseinheit ein als Zapfen ausgebildetes, insbesondere das zuvor bereits genannte, Sperrelement umfasst, welches bei zumindest teilweise geöffneter Schutzhaube in die Betätigungseinheit eingreift. Bevorzugt wirkt das Sperrelement bei zumindest teilweise geöffneter Schutzhaube auf den Hebelarm der Betätigungseinheit ein. Es ist denkbar, dass der Hebelarm eine Ausnehmung, eine Kerbe oder dergleichen aufweist, in welcher das Sperrelement im Sperrzustand angeordnet ist. Insbesondere blockiert das Sperrelement bei zumindest teilweise geöffneter Schutzhaube die Bewegung des Bedienelements entlang der Schutzhaube. Vorzugsweise blockiert das Sperrelement im Sperrzustand eine Bewegung, insbesondere eine Drehung, des Hebelarms, insbesondere um die Bedienelementdrehachse. Vorteilhaft kann einem Betätigen der Spanneinheit mittels der Betätigungseinheit besonders effektiv und konstruktiv einfach und somit auch einem Herausfallen des Werkzeugs bei zumindest teilweise geöffneter Schutzhaube entgegengewirkt werden.

Weiterhin wird vorgeschlagen, dass die Sicherungseinheit ein, insbesondere das zuvor bereits genannte, Sperrelement umfasst, welches durch eine Drehung um eine Sperrelementdrehachse in eine, insbesondere die zuvor bereits genannte, Entsperrposition oder in eine, insbesondere die zuvor bereits genannte, Sperrposition bewegbar ist. Beispielsweise ist die Sicherungseinheit, insbesondere das Sperrelement, drehbar an einem Teil der Schutzhaube gelagert, an dem Gehäuseelement der Werkzeugmaschine oder an einem weiteren Gehäuseelement der Werkzeugmaschine gelagert. Vorteilhaft kann eine besonders platzsparende und leichtgängige Sicherungseinheit zur Verfügung gestellt werden.

Des Weiteren wird vorgeschlagen, dass die Drehung des Sperrelements durch eine Bewegung zumindest eines Teils der Schutzhaube erzeugbar ist. Vorzugsweise ist die Schutzhaube, insbesondere der zumindest eine Teil der Schutzhaube, relativ zu dem Sperrelement derart angeordnet, dass der zumindest eine Teil beim Schließen der Schutzhaube an der Sicherungseinheit anschlägt und das Sperrelement in die Entsperrposition bewegt. Alternativ ist auch denkbar, dass die Sicherungseinheit, insbesondere zumindest das Sperrelement, unabhängig von der Schutzhaubenstellung, mechanisch, insbesondere wirkungstechnisch, bevorzugt unmittelbar, mit der Schutzhaube, insbesondere dem zumindest einen Teil der Schutzhaube, verbunden ist. Vorteilhaft kann eine besonders einfache und komfortable und hinsichtlich einer Bediensicherheit vorteilhafte Betätigung der Sicherungseinheit erreicht werden.

Ferner wird vorgeschlagen, dass die Schutzhaube zumindest ein Schutzhaubenoberteil und ein Schutzhaubenunterteil aufweist, welches relativ zu dem Schutzhaubenoberteil um eine Schutzhaubendrehachse drehbar angeordnet ist. Das Schutzhaubenoberteil ist vorzugsweise fest, insbesondere drehfest, mit dem Gehäuseelement, dem weiteren Gehäuseelement oder einem zusätzlichen Gehäuseelement der Werkzeugmaschine verbunden. Das Bedienelement ist vorzugsweise zur Betätigung der Spanneinheit entlang des Schutzhaubenoberteils bewegbar. Es ist denkbar, dass das Schutzhaubenoberteil eine Rampe oder dergleichen aufweist, entlang welcher das Bedienelement zur Betätigung der Spanneinheit bewegbar ist. Die Rampe ist insbesondere auf einem Grundkörper des Schutzhaubenoberteils aufgesetzt. Es ist denkbar, dass die Rampe separat zu dem Grundkörper ausgebildet ist und an dem Grundkörper befestigt ist, beispielsweise mittels einer Schraubverbindung, einer Rastverbindung oder dergleichen, oder dass die Rampe einstückig mit dem Grundkörper ausgebildet ist. Alternativ ist jedoch auch denkbar, dass das Schutzhaubenoberteil frei von einer Rampe ausgebildet ist. Das Schutzhaubenoberteil und das Schutzhaubenunterteil umgeben zumindest teilweise den Werkzeugaufnahmebereich. Das Schutzhaubenunterteil ist insbesondere zwischen dem geöffneten Zustand der Schutzhaube und dem geschlossenen Zustand der Schutzhaube relativ zu dem Schutzhaubenoberteil schwenkbar. Die Sicherungseinheit ist vorzugsweise durch ein Zusammenwirken, insbesondere eine Bewegung, des Schutzhaubenunterteils betätigbar. Bevorzugt bewegt das Schutzhaubenunterteil beim Schließen der Schutzhaube das Sperrelement in den Entsperrzustand. Vorteilhaft kann die Sicherungseinheit durch eine Relativbewegung des Schutzhaubenunterteils zu dem Schutzhaubenoberteil betätigt werden, insbesondere automatisch. Vorteilhaft kann ein besonders hoher Bedienkomfort realisiert werden.

Zudem wird vorgeschlagen, dass die Schutzhaubendrehachse beabstandet von und zumindest im Wesentlichen parallel zu der Bedienelementdrehachse angeordnet ist. Alternativ ist auch denkbar, dass die Schutzhaubendrehachse der Bedienelementdrehachse entspricht. Vorteilhaft kann ein Platzbedarf der Betätigungseinheit und der Schutzhaube besonders kompakt gehalten werden.

Außerdem wird vorgeschlagen, dass die Schutzhaubendrehachse beabstandet von und zumindest im Wesentlichen parallel zu der Sperrelementdrehachse angeordnet ist. Es kann vorteilhaft eine besonders günstige Kraftwirkungskette zwischen der Schutzhaube und der Sicherungseinheit zur Betätigung der Sicherungseinheit erreicht werden. Vorteilhaft kann die Sicherungseinheit mit besonders geringem Kraftaufwand betätigt werden.

Zudem wird vorgeschlagen, dass die Sperrelementdrehachse beabstandet von und zumindest im Wesentlichen parallel zu der Bedienelementdrehachse angeordnet ist. Vorteilhaft kann ein Platzbedarf der Betätigungseinheit und der Sicherungseinheit besonders kompakt gehalten werden. Vorteilhaft kann eine besonders günstige Kraftwirkungskette zwischen der Sicherungseinheit und der Betätigungseinheit zum Sperren und/oder Entsperren der Betätigungseinheit erreicht werden.

Ferner wird vorgeschlagen, dass die Schutzhaube die Sicherungseinheit zumindest teilweise umgibt. Vorzugsweise ist die Sicherungseinheit, insbesondere zumindest das Sperrelement, auf einer dem Werkzeugaufnahmebereich zugewandten Seite der Schutzhaube angeordnet. Bevorzugt ist die Sicherungseinheit, insbesondere zumindest das Sperrelement, zwischen dem Schutzhaubenoberteil und dem Schutzhaubenunterteil angeordnet. Vorteilhaft kann die Sicherungseinheit vor Beschädigungen, insbesondere vor direkten Stößen, geschützt werden. Durch die Anordnung der Sicherungseinheit kann einem unbeabsichtigten Entsperren der Sicherungseinheit besonders einfach und effektiv entgegengewirkt werden.

Weiterhin wird eine Werkzeugmaschine, insbesondere eine Handkreissäge, mit einer erfindungsgemäßen Werkzeugmaschinenvorrichtung vorgeschlagen. Die Werkzeugmaschine ist vorzugsweise als eine tragbare Werkzeugmaschine ausgebildet, insbesondere als eine Handwerkzeugmaschine. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Vorzugsweise ist die Werkzeugmaschine als Handkreissäge ausgebildet. Es ist jedoch auch denkbar, dass die Werkzeugmaschine eine andere, einem Fachmann als sinnvoll erscheinende Ausgestaltung aufweist, wie beispielsweise eine Ausgestaltung als Winkelschleifmaschine, als Tischkreissäge, als Oszillationswerkzeugmaschine, als Schleifmaschine o. dgl. Durch die erfindungsgemäße Ausgestaltung kann vorteilhaft eine Werkzeugmaschine zur Verfügung gestellt werden, die ein besonders schnelles Lösen und Wechseln von Werkzeugen an der Werkzeugmaschine ermöglicht. Vorteilhaft kann ein besonders effizienter Arbeitsablauf realisiert werden.

Des Weiteren wird ein System mit einem Werkzeug, insbesondere einem Kreissägeblatt, und mit einer erfindungsgemäßen Werkzeugmaschine vorgeschlagen. Alternativ zu einer Ausbildung als Kreissägeblatt ist auch denkbar, dass das Werkzeug als eine Schleifscheibe, als eine Trennscheibe, als eine Polierscheibe oder als ein anderes, einem Fachmann als sinnvoll erscheinendes Werkzeug ausgebildet ist. Vorteilhaft kann ein System zur Verfügung gestellt werden, dass ein besonders schnelles und einfaches Lösen des Werkzeugs von der Werkzeugmaschine ermöglicht. Vorteilhaft können Werkzeuge besonders schnell und komfortabel ausgetauscht werden. Es kann vorteilhaft ein besonders effizientes Arbeiten mit der Werkzeugmaschine realisiert werden.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine schematische Ansicht eines erfindungsgemäßen Systems mit einer erfindungsgemäßen Werkzeugmaschine und einem an der Werkzeugmaschine angeordneten Werkzeug,
- Fig. 2: eine perspektivische Explosionsdarstellung einer erfindungsgemäßen Werkzeugmaschinenvorrichtung der erfindungsgemäßen Werkzeugmaschine,
- Fig. 3: eine perspektivische Schnittdarstellung durch die Werkzeugmaschine aus Figur 1
- Fig. 4: eine schematische Frontansicht eines Teils der erfindungsgemäßen Werkzeugmaschine ohne das Werkzeug in einem Entsperrzustand einer Sicherungseinheit der erfindungsgemäßen Werkzeugmaschinenvorrichtung,
- Fig. 5: eine schematische, perspektivische Rückansicht eines Teils der erfindungsgemäßen Werkzeugmaschine mit dem Werkzeug in dem Entsperrzustand der Sicherungseinheit,
- Fig. 6: eine schematische Frontansicht des Teils der erfindungsgemäßen Werkzeugmaschine ohne das Werkzeug in einem Sperrzustand der Sicherungseinheit und
- Fig. 7: eine schematische, perspektivische Rückansicht eines Teils der erfindungsgemäßen Werkzeugmaschine mit dem Werkzeug in dem Sperrzustand der Sicherungseinheit.

### Beschreibung des Ausführungsbeispiels

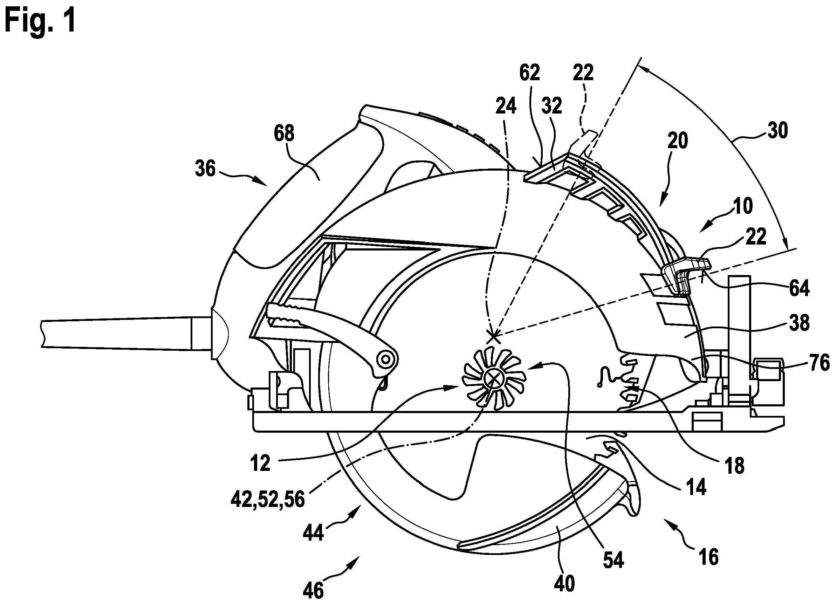

Figur 1 zeigt ein System 46 mit einem Werkzeug 14 und mit einer Werkzeugmaschine 44. Die Werkzeugmaschine 44 ist als tragbare Werkzeugmaschine, insbesondere als Handwerkzeugmaschine, ausgebildet. Die Werkzeugmaschine 44 ist als Handkreissäge ausgebildet. Es ist jedoch auch denkbar, dass die Werkzeugmaschine 44 eine andere, einem Fachmann als sinnvoll erscheinende Ausgestaltung aufweist, wie beispielsweise eine Ausgestaltung als Winkelschleifmaschine, als Tischkreissäge, als Oszillationswerkzeugmaschine, als Schleifmaschine o. dgl. Das Werkzeug 14 ist als Kreissägeblatt ausgebildet. Alternativ ist auch denkbar, dass das Werkzeug 14 als eine Schleifscheibe, als eine Trennscheibe, als eine Polierscheibe oder als ein anderes, einem Fachmann als sinnvoll erscheinendes Werkzeug 14 ausgebildet ist.

Die Werkzeugmaschine 44 umfasst eine Werkzeugmaschinenvorrichtung 10. Die Werkzeugmaschinenvorrichtung 10 umfasst eine Spanneinheit 12 zur Fixierung des Werkzeugs 14. Die Spanneinheit 12 ist werkzeuglos bedienbar. Die Werkzeugmaschinenvorrichtung 10 umfasst eine Betätigungseinheit 20 zur, insbesondere werkzeuglosen, Betätigung der Spanneinheit 12. Die Spanneinheit 12 ist fest, insbesondere drehfest, an der Werkzeugmaschine 44, insbesondere an einer Abtriebsspindel einer Abtriebseinheit der Werkzeugmaschine 44, angeordnet. Alternativ ist denkbar, dass die Spanneinheit 12 lösbar an der Werkzeugmaschine 44, insbesondere an der Abtriebsspindel, angeordnet ist. Die Spanneinheit 12 ist zu einer, insbesondere werkzeuglosen, Befestigung des Werkzeugs 14 an der Werkzeugmaschinenvorrichtung 10 vorgesehen. Das Werkzeug 14 ist in einem an der Spanneinheit 12 fixierten Zustand rotierend oder oszillierend antreibbar, insbesondere um eine Rotationsachse 52 einer Verbindungsschnittstelle 54 des Werkzeugs 14. Das Werkzeug 14 ist in einem mittels der Spanneinheit 12 an der Werkzeugmaschine 44 fixierten Zustand, vorzugsweise rotierend oder oszillierend, durch die Abtriebsspindel antreibbar. Die Spanneinheit 12 weist, insbesondere betrachtet in einer sich zumindest im Wesentlichen senkrecht zu einer Abtriebsachse 56 der Abtriebsspindel erstreckenden Ebene, eine Außenkontur auf, die korrespondierend ausgebildet ist, mit einer Kontur der Verbindungsschnittstelle 54. Die Kontur der Verbindungsschnittstelle 54 ergibt sich durch einen Verlauf einer inneren Begrenzungskontur und einer äußeren Begrenzungskontur der Verbindungsschnittstelle 54. Die Abtriebsachse 56 verläuft in einem an der Spanneinheit 12 fixierten Zustand des Werkzeugs 14 zumindest im Wesentlichen parallel zu der Rotationsachse 52 der Verbindungsschnittstelle 54. Die Abtriebsachse 56 entspricht in einem an der Spanneinheit 12 fixierten Zustand des Werkzeugs 14 der Rotationsachse 52 der Verbindungsschnittstelle 54.

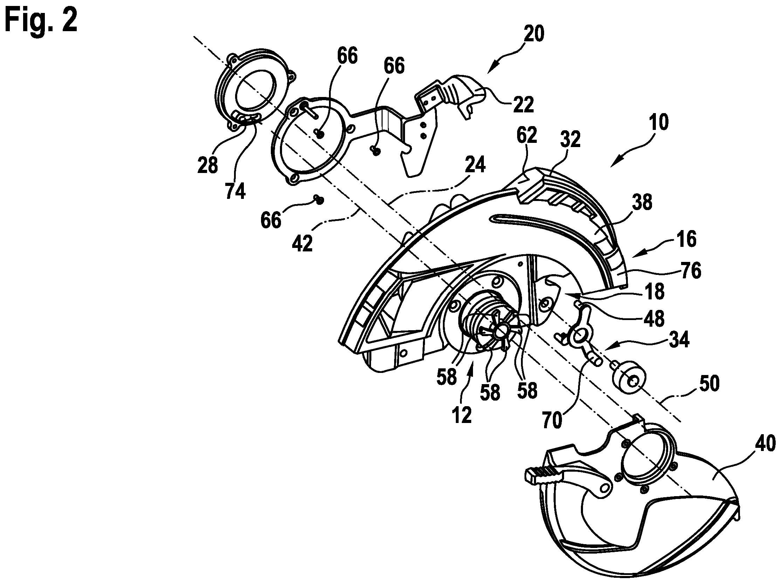

Die Spanneinheit 12 ist hier als eine Schnellspannvorrichtung ausgebildet, wie diese beispielsweise in WO 2021/130026 A1 offenbart ist, jedoch mit sechs zu der Verbindungsschnittstelle 54 korrespondierend ausgebildeten Halteflügeln (vgl. auch Figur 2).

Alternativ ist jedoch auch denkbar, dass die Spanneinheit 12 gemäß der Schnellspannvorrichtung aus WO 2021/130026 A1 mit vier Halteflügeln ausgebildet ist, als eine Schnellspannvorrichtung ausgebildet ist, wie diese beispielsweise in DE 10 2017 213 669 A1 offenbart ist, oder als eine andere, einem Fachmann als sinnvoll erscheinende Schnellspannvorrichtung ausgebildet ist.

Die Abtriebseinheit ist dazu vorgesehen, eine Rotations- und/oder Oszillationsbewegung um die Abtriebsachse 56 auf das mittels der Spanneinheit 12 an der Abtriebseinheit fixierte Werkzeug 14 zu übertragen. Die Abtriebseinheit ist wirkungsmäßig auf eine, einem Fachmann bereits bekannte Art und Weise mit einer Antriebseinheit der Werkzeugmaschine 44 verbunden, insbesondere über zumindest ein Antriebsritzel der Antriebseinheit. Die Abtriebseinheit umfasst insbesondere zumindest eine Hülse und/oder zumindest eine Hohlwelle, insbesondere eine Hohlspindel, die die Abtriebsspindel bildet. Die Rotations- und/oder Oszillationsbewegung der Abtriebseinheit ist vorzugsweise infolge eines Zusammenwirkens der Abtriebseinheit mit der Antriebseinheit der Werkzeugmaschine 44, welche zumindest einen Elektromotor umfasst, erzeugbar.

Die Werkzeugmaschinenvorrichtung 10 umfasst eine Schutzhaube 16, welche einen Werkzeugaufnahmebereich 18 für das Werkzeug 14 zumindest teilweise umgibt. Die Betätigungseinheit 20 weist ein Bedienelement 22 auf, welches zu einer Betätigung zumindest teilweise entlang der Schutzhaube 16 bewegbar ist. Das Bedienelement 22 ist zu einer manuellen Betätigung durch einen Nutzer vorgesehen. Das Bedienelement 22 ist um eine Bedienelementdrehachse 24 bewegbar. Das Bedienelement 22 ist durch eine Drehung um die Bedienelementdrehachse 24 entlang der Schutzhaube 16 bewegbar. Das Bedienelement 22 ist zur Betätigung zumindest im Wesentlichen parallel zu einer Oberfläche 58, insbesondere Außenfläche, der Schutzhaube 16 bewegbar.

Die Betätigungseinheit 20 umfasst zumindest einen Hebelarm 60. Mittels des Hebelarms 60 ist das Bedienelement 22 um die Bedienelementdrehachse 24 bewegbar. Das Bedienelement 22 ist drehbar an einem Teil der Schutzhaube 16, insbesondere an einem Schutzhaubenoberteil 38 der Schutzhaube 16, gelagert, insbesondere mittels des Hebelarms 60. Das Bedienelement 22 ist zur Betätigung der Spanneinheit 12 entlang des Schutzhaubenoberteils 38 bewegbar. Alternativ ist auch denkbar, dass das Bedienelement 22, insbesondere der Hebelarm 60, an einem Gehäuseelement der Werkzeugmaschine 44, welches insbesondere verschieden ist von der Schutzhaube 16, oder dergleichen bewegbar, bevorzugt drehbar, gelagert ist. Das Bedienelement 22 ist beabstandet zu der Schutzhaube 16, insbesondere dem Schutzhaubenoberteil 38, angeordnet. Das Bedienelement 22 ist zur Betätigung in gleichbleibendem Abstand zu der Schutzhaube 16, insbesondere dem Schutzhaubenoberteil 38, zumindest teilweise entlang der Schutzhaube 16, insbesondere dem Schutzhaubenoberteil 38, bewegbar. Alternativ ist jedoch auch denkbar, dass das Bedienelement 22 an der Schutzhaube 16 anliegt, insbesondere durch die Schutzhaube 16, vorzugsweise die dem Bedienelement 22 zugewandte Oberfläche 58 der Schutzhaube 16, bei einer Bewegung entlang der Schutzhaube 16, insbesondere dem Schutzhaubenoberteil 38, führbar ist. Zur Lösung des Werkzeugs 14 aus einem an der Spanneinheit 12 fixierten Zustand ist lediglich das eine Bedienelement 22 zu betätigen.

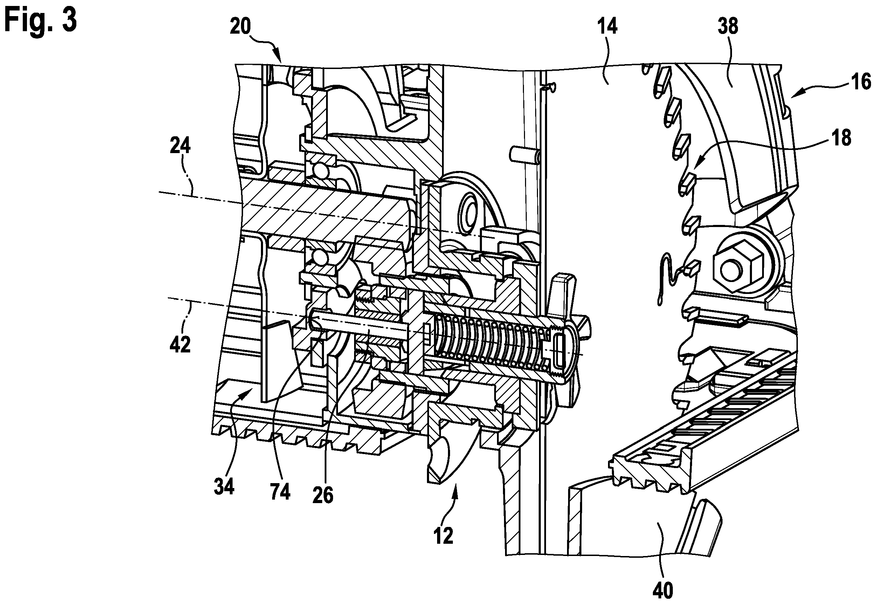

Durch eine Bewegung des Bedienelements 22 um die Bedienelementdrehachse 24 ist eine zur Bedienelementdrehachse 24 zumindest im Wesentlichen parallel verlaufende Bewegung eines Betätigungselements 26 der Spanneinheit 12 erzeugbar (vgl. auch Figur 3). Die Bedienelementdrehachse 24 verläuft zumindest im Wesentlichen parallel zu der Abtriebsachse 56 der Abtriebsspindel und/oder der Rotationsachse 52 der Verbindungsschnittstelle 54 des Werkzeugs 14 in einem an der Spanneinheit 12 fixierten Zustand des Werkzeugs 14. Eine Bewegung des Bedienelements 22 zur Betätigung der Spanneinheit 12 verläuft in einer Ebene, welche zumindest im Wesentlichen senkrecht zu der Abtriebsachse 56 und/oder der Rotationsachse 52 des Werkzeugs 14 in einem an der Spanneinheit 12 fixierten Zustand des Werkzeugs 14 verläuft.

Das Betätigungselement 26 ist beispielsweise als ein Bolzen, als ein Stift oder als ein anderes, einem Fachmann als sinnvoll erscheinendes Betätigungselement 26 ausgebildet. Die Spanneinheit 12 weist zumindest zwei Zustände, insbesondere einen Lösezustand und einen Befestigungszustand, auf. Im Lösezustand ist das Werkzeug 14 von der Spanneinheit 12, insbesondere aus einer Montageposition an der Spanneinheit 12, abnehmbar oder in der Montageposition an der Spanneinheit 12 anordenbar. Im Befestigungszustand der Spanneinheit 12 ist das Werkzeug 14 in einem an der Spanneinheit 12 angeordneten Zustand, insbesondere in der Montageposition, an der Spanneinheit 12 fixiert. Durch eine Bewegung des Betätigungselements 26 der Spanneinheit 12 ist die Spanneinheit 12 von dem Befestigungszustand in den Lösezustand überführbar oder von dem Lösezustand in den Befestigungszustand überführbar.

In Figur 1 ist die Betätigungseinheit 20, insbesondere das Bedienelement 22, in zwei unterschiedlichen Positionen dargestellt. Die Darstellung des Bedienelements 22 mit durchgezogenen Linien entspricht dem Befestigungszustand der Spanneinheit 12, wobei sich das Bedienelement 22 in einer Endposition des Bedienelements 22 im Befestigungszustand der Spanneinheit 12 befindet. Die gestrichelte Darstellung des Bedienelements 22 entspricht dem Lösezustand der Spanneinheit 12, wobei sich das Bedienelement 22 in einer Endposition des Bedienelements 22 im Lösezustand der Spanneinheit 12 befindet. Es ist zusätzlich denkbar, dass die Betätigungseinheit 20 ein Federelement aufweist, welches das Bedienelement 22 mit einer Kraft in Richtung der Endposition des Bedienelements 22 im Befestigungszustand der Spanneinheit 12 beaufschlagt.

Die Betätigungseinheit 20 umfasst ein rampenförmiges Betätigungsmittel 28. Das Betätigungsmittel 28 ist dazu vorgesehen, mit dem Betätigungselement 26 der Spanneinheit 12 zur Betätigung der Spanneinheit 12 zusammenzuwirken. Das Betätigungsmittel 28 ist dazu vorgesehen, die Bewegung des Bedienelements 22, insbesondere über den Hebelarm, auf das Betätigungselement 26 der Spanneinheit 12 zu übertragen. Das Betätigungsmittel 28 ist an dem Hebelarm angeordnet. Das Betätigungsmittel 28 ist über den Hebelarm mit dem Bedienelement 22 verbunden. Der Hebelarm ist zweiteilig ausgebildet. Alternativ ist jedoch auch denkbar, dass der Hebelarm einteilig ausgebildet ist oder durch mehr als zwei Teile gebildet ist. Das Betätigungsmittel 28 ist mittels Schrauben 66 an dem Hebelarm befestigt. Alternativ ist auch denkbar, dass das Betätigungsmittel 28 mittels einer Rastverbindung, einer Nietverbindung oder dergleichen an dem Hebelarm befestigt ist, insbesondere drehfest, oder dass das Betätigungsmittel 28 zumindest teilweise einstückig mit dem Hebelarm ausgebildet ist. Insbesondere sind das Betätigungsmittel 28 und das Bedienelement 22 an zueinander entgegengesetzten Enden des Hebelarms angeordnet.

Das Betätigungsmittel 28 umgibt die Bedienelementdrehachse 24 zumindest teilweise. Das Betätigungsmittel 28 umgibt die Bedienelementdrehachse 24 in einem Winkelbereich von maximal 75°. Der Winkelbereich, in welchem das Betätigungsmittel 28 die Bedienelementdrehachse 24 umgibt, beträgt zumindest 20°.

Durch einen Betätigungsweg 30 des Bedienelements 22 entlang der Schutzhaube 16 von zumindest 40° ist die Spanneinheit 12 lösbar. Die Spanneinheit 12 ist durch einen Betätigungsweg 30 des Bedienelements 22 ausgehend von der Endposition des Bedienelements 22 im Befestigungszustand der Spanneinheit 12 entlang der Schutzhaube 16, insbesondere des Schutzhaubenoberteils 38, von zumindest 40° lösbar. Alternativ ist jedoch auch denkbar, dass die Betätigungseinheit 20 derart ausgebildet ist, dass der Betätigungsweg 30, insbesondere zum Lösen der Spanneinheit 12, ausgehend von der Endposition des Bedienelements 22 im Befestigungszustand der Spanneinheit 12, weniger als 40° beträgt. Ein Betätigungsweg des Bedienelements 22 ausgehend von der Endposition des Bedienelements 22 im Lösezustand der Spanneinheit 12 zur Erzeugung des Befestigungszustands ist insbesondere kleiner als der Betätigungsweg 30 zur Erzeugung des Lösezustands ausgehend von der Endposition des Bedienelements 22 im Befestigungszustand der Spanneinheit 12.

Der Betätigungsweg 30 des Bedienelements 22 entlang der Schutzhaube 16 zur Betätigung der Spanneinheit 12 beträgt maximal 75°. Der Betätigungsweg 30 des Bedienelements 22 entlang der Schutzhaube 16, insbesondere des Schutzhaubenoberteils 38, zum Lösen der Spanneinheit 12 beträgt maximal 75°, insbesondere um die Bedienelementdrehachse 24, vorzugsweise ausgehend von der Endposition des Bedienelements 22 im Befestigungszustand der Spanneinheit 12. Alternativ ist auch denkbar, dass der Betätigungsweg 30 des Bedienelements 22 entlang der Schutzhaube 16 zur Betätigung der Spanneinheit 12, insbesondere zum Lösen der Spanneinheit 12 aus dem Befestigungszustand, mehr als 75°, insbesondere um die Bedienelementdrehachse 24, beträgt, beispielsweise maximal 90°, vorzugsweise maximal 135°, besonders bevorzugt maximal 180°.

Der Betätigungsweg 30 weist einen Leerweg von zumindest 20° auf. Der Leerweg verläuft ausgehend von der Endposition des Bedienelements 22 in dem Befestigungszustand der Spanneinheit 12. Die Betätigungseinheit 20, insbesondere das Betätigungsmittel 28, übt lediglich in einem außerhalb des Leerwegs angeordneten Zustand des Bedienelements 22 eine Betätigungswirkung, insbesondere eine Betätigungskraft, auf die Spanneinheit 12, insbesondere das Betätigungselement 26 der Spanneinheit 12, aus. Die Spanneinheit 12, insbesondere das Betätigungselement 26, ist in einem innerhalb des Leerwegs angeordneten Zustand des Bedienelements 22 frei von einer Betätigungswirkung, insbesondere einer Betätigungskraft, durch die Betätigungseinheit 20, insbesondere das Betätigungsmittel 28 der Betätigungseinheit 20. Das Betätigungsmittel 28, insbesondere eine Kraftübertragungsfläche 74 des Betätigungsmittels 28, übt in einem außerhalb des Leerwegs angeordneten Zustand des Bedienelements 22 eine Kraft auf das Betätigungselement 26 des Spanneinheit 12 aus.

Das Bedienelement 22 ist in radialer Richtung betrachtet auf einer dem Werkzeugaufnahmebereich 18 abgewandten Seite der Schutzhaube 16 angeordnet.

Die radiale Richtung bezieht sich insbesondere auf die Bedienelementdrehachse 24. Das Bedienelement 22 ist in einem Befestigungszustand der Spanneinheit 12 auf einer einer Bedienseite 36 abgewandten Seite der Schutzhaube 16 angeordnet. Ein Bediener befindet sich zumindest bei einem ordnungsgemäßen Betrieb der Werkzeugmaschine 44 auf der Bedienseite 36. Auf der Bedienseite 36 ist ein Haupthandgriff 68 der Werkzeugmaschine 44, insbesondere der Werkzeugmaschinenvorrichtung 10 angeordnet.

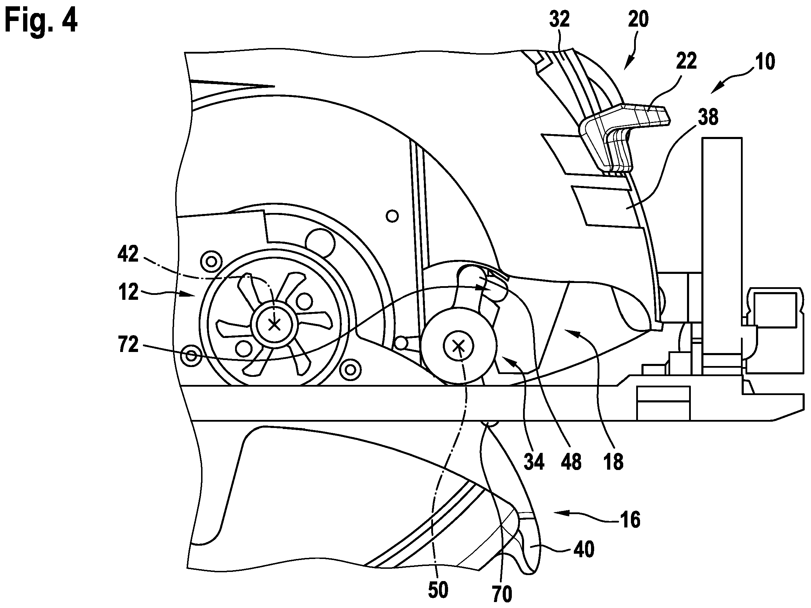

Die Werkzeugmaschinenvorrichtung 10 umfasst zumindest eine Sicherungseinheit 34, welche die Betätigungseinheit 20 bei zumindest teilweise geöffneter Schutzhaube 16 blockiert (vgl. Figuren 4 bis 7). Die Sicherungseinheit 34 ist mechanisch ausgebildet. Die Betätigungseinheit 20 ist durch die Sicherungseinheit 34, insbesondere automatisch, in Abhängigkeit von einer Schutzhaubenstellung der Schutzhaube 16, insbesondere eines Schutzhaubenunterteils 40 relativ zu dem Schutzhaubenoberteil 38, blockiert oder freigegeben. Das Schutzhaubenunterteil 40 ist relativ zu dem Schutzhaubenoberteil 38 um eine Schutzhaubendrehachse 42 drehbar angeordnet.

Das Schutzhaubenoberteil 38 ist fest, insbesondere drehfest, mit einem Gehäuseelement der Werkzeugmaschine 44 verbunden. Das Schutzhaubenoberteil 38 weist eine Rampe 32 auf, entlang welcher das Bedienelement 22 zur Betätigung der Spanneinheit 12 bewegbar ist. Die Rampe 32 ist auf einem Grundkörper 76 des Schutzhaubenoberteils 38 aufgesetzt. Es ist denkbar, dass die Rampe 32 separat zu dem Grundkörper 76 ausgebildet ist und an dem Grundkörper 76 befestigt ist, beispielsweise mittels einer Schraubverbindung, einer Rastverbindung oder dergleichen, oder dass die Rampe 32 einstückig mit dem Grundkörper 76 ausgebildet ist. Alternativ ist jedoch auch denkbar, dass das Schutzhaubenoberteil 38 frei von einer Rampe 32 ausgebildet ist. Das Schutzhaubenoberteil 38 und das Schutzhaubenunterteil 40 umgeben zumindest teilweise den Werkzeugaufnahmebereich 18. Die Rampe 32 weist eine Anlegefläche 62 zum Auflegen eines Handballens des Bedieners beim Bedienen des Bedienelements 22 auf. Das Bedienelement 22 weist eine Grifffläche 64 auf zum Anlegen von Fingern des Bedieners beim Bedienen des Bedienelements 22. Zum Lösen der Spanneinheit 12 ist das Bedienelement 22 von der Endposition im Befestigungszustand der Spanneinheit 12 insbesondere in Richtung der Bedienseite 36 bewegbar, vorzugsweise in die Endposition des Bedienelements 22 im Lösezustand der Spanneinheit 12.

Das Schutzhaubenunterteil 40 ist zwischen dem zumindest teilweise geöffneten Zustand der Schutzhaube 16 und dem geschlossenen Zustand der Schutzhaube 16 relativ zu dem Schutzhaubenoberteil 38 schwenkbar. Die Sicherungseinheit 34 ist in Abhängigkeit von der Schutzhaubenstellung, insbesondere automatisch, betätigbar. Die Sicherungseinheit 34 gibt eine Betätigung der Betätigungseinheit 20 bei geschlossener Schutzhaube 16, insbesondere geschlossenem Schutzhaubenunterteil 40, vorzugsweise automatisch, frei. Die Schutzhaubenstellung gibt insbesondere an, ob die Schutzhaube 16, insbesondere das Schutzhaubenunterteil 40, zumindest teilweise geöffnet ist oder geschlossen ist.

Alternativ ist auch denkbar, dass die Sicherungseinheit 34 zumindest teilweise elektrisch ausgebildet ist. Beispielsweise ist alternativ denkbar, dass die Sicherungseinheit 34 eine Erfassungseinheit zur Erfassung der Schutzhaubenstellung aufweist. Die Erfassungseinheit kann beispielsweise einen mechanischen Sensor, einen optischen Sensor, oder einen anderen, einem Fachmann als sinnvoll erscheinenden Sensor zur Erfassung der Schutzhaubenstellung umfassen. Es ist denkbar, dass die Sicherungseinheit 34 eine Steuereinheit umfasst, welche insbesondere dazu eingerichtet ist, ein Signal der Erfassungseinheit auszuwerten und in Abhängigkeit davon die Betätigungseinheit 20 zu blockieren oder freizugeben. Die Steuereinheit umfasst insbesondere zumindest einen Prozessor und ein Speicherelement sowie ein auf dem Speicherelement gespeichertes Betriebsprogramm. Das Speicherelement ist vorzugsweise als digitales Speichermedium, beispielsweise als eine Festplatte oder dergleichen ausgebildet. Es ist auch denkbar, dass die Steuereinheit der Sicherungseinheit 34 zumindest teilweise von einer Steuereinheit der Werkzeugmaschine 44 gebildet ist.

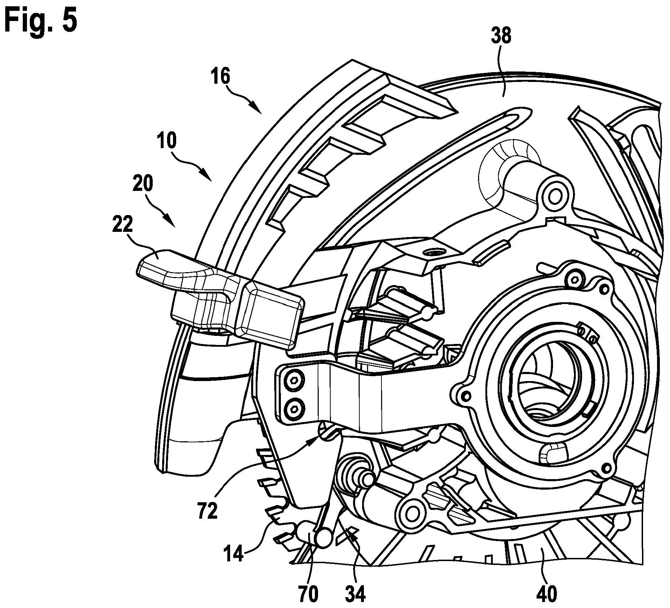

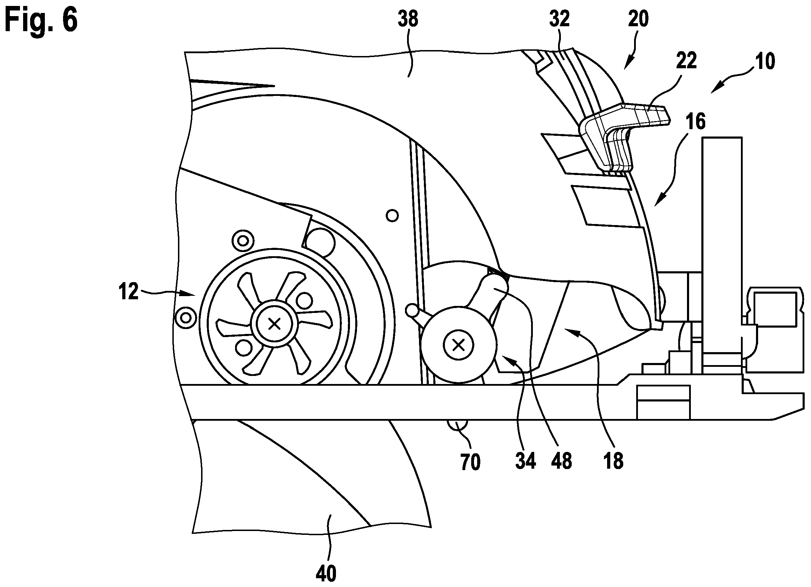

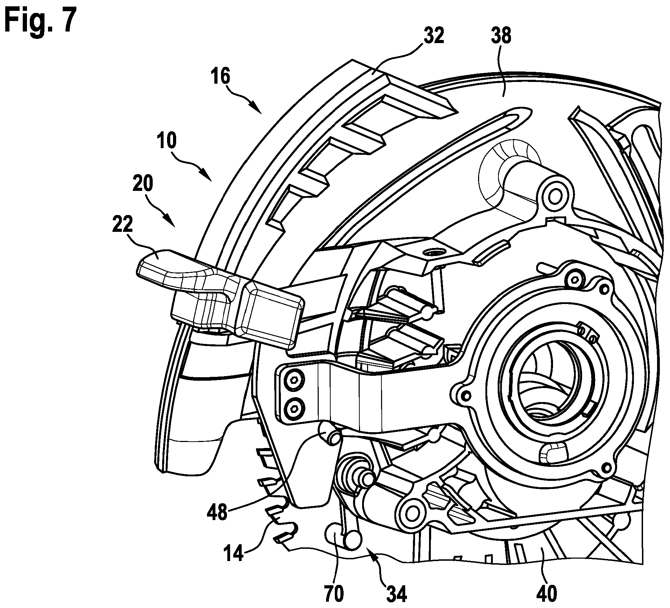

Die Sicherungseinheit 34 umfasst ein Sperrelement 48. Ein Schließen der Schutzhaube 16 bewegt das Sperrelement 48 in eine Entsperrposition. Das Sperrelement 48 ist als ein Zapfen ausgebildet. Alternativ ist auch denkbar, dass das Sperrelement 48 als ein Haken, als ein rampenförmiges Element, oder als ein anderes, einem Fachmann als sinnvoll erscheinendes Sperrelement 48 ausgebildet ist. Die Betätigungseinheit 20 ist in der Entsperrposition des Sperrelements 48 betätigbar. In den Figuren 4 und 5 befindet sich das Sperrelement 48 in der Entsperrposition, wobei das Schutzhaubenunterteil 40 insbesondere geschlossen ist und gegen einen Anschlagzapfen 70 der Sicherungseinheit 34 drückt. Im Entsperrzustand befindet sich das Sperrelement 48 in der Entsperrposition. Das Bedienelement 22 ist in einem Entsperrzustand des Sperrelements 48 entlang der Schutzhaube 16, insbesondere entlang des Schutzhaubenoberteils 38, bewegbar. Die Betätigungseinheit 20, insbesondere das Bedienelement 22, ist in dem Entsperrzustand des Sperrelements 48 frei von einem Eingriff, insbesondere einer Krafteinwirkung, durch die Sicherungseinheit 34, insbesondere das Sperrelement 48. Die Sicherungseinheit 34 ist durch eine Bewegung zumindest eines Teils der Schutzhaube 16, insbesondere des Schutzhaubenunterteils 40 relativ zu der Sicherungseinheit 34, vorzugsweise dem Sperrelement 48, betätigbar. Das Sperrelement 48 ist durch eine Bewegung des Schutzhaubenunterteils 40 bewegbar. Das Sperrelement 48 ist durch eine Bewegung des zumindest einen Teils der Schutzhaube 16, insbesondere durch eine Bewegung des Schutzhaubenunterteils 40 relativ zu der Sicherungseinheit 34, vorzugsweise dem Sperrelement 48, von dem Entsperrzustand in einen Sperrzustand und/oder von dem Sperrzustand in den Entsperrzustand bewegbar. Im Sperrzustand befindet sich das Sperrelement 48 in einer Sperrposition. In den Figuren 6 und 7 befindet sich das Sperrelement 48 in der Sperrposition, wobei das Schutzhaubenunterteil 40 insbesondere zumindest teilweise geöffnet ist und der Anschlagzapfen 70 der Sicherungseinheit 34 frei von einer Krafteinwirkung durch das Schutzhaubenunterteil 40 ist. Das Sperrelement 48 ist lediglich in einem geschlossenen Zustand der Schutzhaube 16 in die Entsperrposition bewegbar. Vorzugsweise ist die Sicherungseinheit 34 derart ausgebildet, dass sich das Sperrelement 48 in einem geöffneten Zustand der Schutzhaube 16 automatisch in den Sperrzustand bewegt, beispielsweise mittels eines schwerkraftgesteuerten Mechanismus, mittels eines Federelements oder dergleichen.

Das Sperrelement 48 ist als Zapfen ausgebildet. Das Sperrelement 48 greift bei zumindest teilweise geöffneter Schutzhaube 16 in die Betätigungseinheit 20 ein. Das Sperrelement 48 wirkt bei zumindest teilweise geöffneter Schutzhaube 16 auf den Hebelarm der Betätigungseinheit 20 ein. Der Hebelarm weist eine Ausnehmung 72 auf, in welcher das Sperrelement 48 im Sperrzustand angeordnet ist. Das Sperrelement 48 blockiert bei zumindest teilweise geöffneter Schutzhaube 16 die Bewegung des Bedienelements 22 entlang der Schutzhaube 16, insbesondere des Schutzhaubenoberteils 38. Das Sperrelement 48 blockiert im Sperrzustand eine Bewegung, insbesondere eine Drehung, des Hebelarms, insbesondere um die Bedienelementdrehachse 24.

Durch eine Drehung des Sperrelements 48 um eine Sperrelementdrehachse 50 ist das Sperrelement 48 in die Entsperrposition oder in die Sperrposition bewegbar. Die Sicherungseinheit 34, insbesondere das Sperrelement 48, ist drehbar an der Schutzhaube 16, insbesondere dem Schutzhaubenoberteil 38 gelagert. Alternativ ist jedoch auch denkbar, dass die Sicherungseinheit 34, insbesondere zumindest das Sperrelement 48, an einem Gehäuseelement der Werkzeugmaschine 44 drehbar gelagert ist.

Die Drehung des Sperrelements 48 ist durch eine Bewegung zumindest eines Teils der Schutzhaube 16 erzeugbar. Das Schutzhaubenunterteil 40 bewegt beim Schließen der Schutzhaube 16 das Sperrelement 48 in den Entsperrzustand. Die Schutzhaube 16, insbesondere das Schutzhaubenunterteil 40, ist derart relativ zu dem Sperrelement 48 angeordnet, dass das Schutzhaubenunterteil 40 beim Schließen der Schutzhaube 16 an der Sicherungseinheit 34, insbesondere dem Anschlagzapfen 70, anschlägt und das Sperrelement 48 in die Entsperrposition bewegt. Der Anschlagzapfen 70 ist fest, insbesondere drehfest mit dem Sperrelement 48 verbunden. Insbesondere ist der Anschlagzapfen 70 einstückig mit dem Sperrelement 48 ausgebildet. Alternativ ist auch denkbar, dass die Sicherungseinheit 34, insbesondere zumindest das Sperrelement 48, unabhängig von der Schutzhaubenstellung, mechanisch, insbesondere wirkungstechnisch, bevorzugt unmittelbar, mit der Schutzhaube 16, insbesondere dem Schutzhaubenunterteil 40, verbunden ist.

Die Schutzhaubendrehachse 42 ist beabstandet von und zumindest im Wesentlichen parallel zu der Sperrelementdrehachse 50 und/oder der Bedienelementdrehachse 24 angeordnet. Alternativ ist auch denkbar, dass die Schutzhaubendrehachse 42 der Bedienelementdrehachse 24 entspricht. Die Sperrelementdrehachse 50 ist beabstandet von und zumindest im Wesentlichen parallel zu der Bedienelementdrehachse 24 angeordnet.

Die Schutzhaube 16 umgibt die Sicherungseinheit 34 zumindest teilweise. Die Sicherungseinheit 34, insbesondere zumindest das Sperrelement 48, ist auf einer dem Werkzeugaufnahmebereich 18 zugewandten Seite der Schutzhaube 16 angeordnet. Die Sicherungseinheit 34, insbesondere zumindest das Sperrelement 48, ist zwischen dem Schutzhaubenoberteil 38 und dem Schutzhaubenunterteil 40 angeordnet.

## Patentansprüche

1. Werkzeugmaschinenvorrichtung (10), insbesondere Handkreissägenvorrichtung, mit einer Spanneinheit (12) zur Fixierung eines Werkzeugs (14), insbesondere eines Kreissägeblatts, mit einer Schutzhaube (16), welche einen Werkzeugaufnahmebereich (18) für das Werkzeug (14) zumindest teilweise umgibt, und mit einer Betätigungseinheit (20) zur Betätigung der Spanneinheit (12), **gekennzeichnet durch** eine Sicherungseinheit (34), welche die Betätigungseinheit (20) bei zumindest teilweise geöffneter Schutzhaube (16) blockiert.

2. Werkzeugmaschinenvorrichtung (10) nach Anspruch 1, **dadurch gekennzeichnet, dass** die Sicherungseinheit (34) ein Sperrelement (48) umfasst, wobei ein Schließen der Schutzhaube (16) das Sperrelement (48) in eine Entsperrposition bewegt.

3. Werkzeugmaschinenvorrichtung (10) nach Anspruch 1 oder 2, **dadurch gekennzeichnet, dass** die Sicherungseinheit (34) ein als Zapfen ausgebildetes Sperrelement (48) umfasst, welches bei geöffneter Schutzhaube (16) in die Betätigungseinheit (20) eingreift.

4. Werkzeugmaschinenvorrichtung (10) nach einem der vorhergehenden Ansprüche, **dadurch gekennzeichnet, dass** die Sicherungseinheit (34) ein Sperrelement (48) umfasst, welches durch eine Drehung um eine Sperrelementdrehachse (50) in eine Entsperrposition oder in eine Sperrposition bewegbar ist.

5. Werkzeugmaschinenvorrichtung (10) nach Anspruch 4, **dadurch gekennzeichnet, dass** die Drehung des Sperrelements (48) durch eine Bewegung zumindest eines Teils der Schutzhaube (16) erzeugbar ist.

6. Werkzeugmaschinenvorrichtung (10) nach einem der vorhergehenden Ansprüche, **dadurch gekennzeichnet, dass** die Schutzhaube (16) zumindest ein Schutzhaubenoberteil (38) und ein Schutzhaubenunterteil (40) aufweist, welches relativ zu dem Schutzhaubenoberteil (38) um eine Schutzhaubendrehachse (42) drehbar angeordnet ist.

7. Werkzeugmaschinenvorrichtung (10) nach den Ansprüchen 4 und 6, **dadurch gekennzeichnet, dass** die Schutzhaubendrehachse (42) beabstandet von und parallel zu der Sperrelementdrehachse (50) angeordnet ist.

8. Werkzeugmaschinenvorrichtung (10) nach einem der vorhergehenden Ansprüche, **dadurch gekennzeichnet, dass** die Betätigungseinheit (20) ein Bedienelement (22) aufweist, welches zu einer Betätigung zumindest teilweise entlang der Schutzhaube (16) bewegbar ist.

9. Werkzeugmaschinenvorrichtung (10) nach Anspruch 8, **dadurch gekennzeichnet, dass** das Bedienelement (22) um eine Bedienelementdrehachse (24) bewegbar ist, wobei durch eine Bewegung des Bedienelements (22) um die Bedienelementdrehachse (24) eine zur Bedienelementdrehachse (24) parallel verlaufende Bewegung eines Betätigungselements (26) der Spanneinheit (12) erzeugbar ist.

10. Werkzeugmaschinenvorrichtung (10) zumindest nach den Ansprüchen 6 und 9, **dadurch gekennzeichnet, dass** die Schutzhaubendrehachse (42) beabstandet von und parallel zu der Bedienelementdrehachse (24) angeordnet ist.

11. Werkzeugmaschinenvorrichtung (10) zumindest nach den Ansprüchen 4 und 9, **dadurch gekennzeichnet, dass** die Sperrelementdrehachse (50) beabstandet von und parallel zu der Bedienelementdrehachse (24) angeordnet ist.

12. Werkzeugmaschinenvorrichtung (10) nach einem der vorhergehenden Ansprüche, **dadurch gekennzeichnet, dass** die Schutzhaube (16) die Sicherungseinheit (34) zumindest teilweise umgibt.

13. Werkzeugmaschine (44), insbesondere Handkreissäge, mit einer Werkzeugmaschinenvorrichtung (10) nach einem der vorhergehenden Ansprüche.

14. System (46) mit einem Werkzeug (14), insbesondere einem Kreissägeblatt, und mit einer Werkzeugmaschine (44) nach Anspruch 13.

## Claims

1. Machine tool device (10), in particular hand-held circular saw device, with a clamping unit (12) for fixing a tool (14), in particular a circular saw blade, with a protective cover (16) which surrounds a tool receiving area (18) for the tool (14) at least partially, and with an activation unit (20) for activating the clamping unit (12), **characterized by** a locking unit (34) which blocks the activation unit (20) when the protective cover (16) is at least partially opened.

2. Machine tool device (10) according to Claim 1, **characterized in that** the locking unit (34) comprises a blocking element (48), wherein closing the protective cover (16) moves the blocking element (48) to an unblocking position.

3. Machine tool device (10) according to Claim 1 or 2, **characterized in that** the locking unit (34) comprises a blocking element (48) formed as a pin, which engages with the protective cover (16) open in the activation unit (20).

4. Machine tool device (10) according to one of the preceding claims, **characterized in that** the locking unit (34) comprises a blocking element (48), which is movable to an unblocking position or to a blocking position by rotation about a blocking element rotation axis (50).

5. Machine tool device (10) according to Claim 4, **characterized in that** the rotation of the blocking element (48) is able to be generated by moving at least part of the protective cover (16).

6. Machine tool device (10) according to any one of the preceding claims, **characterized in that** the protective cover (16) has at least one protective cover upper part (38) and one protective cover lower part (40) which is disposed so as to be rotatable about a protective cover rotation axis (42) relative to the protective cover upper part (38).

7. Machine tool device (10) according to Claims 4 and 6, **characterized in that** the protective cover rotation axis (42) is disposed so as to be spaced apart from and parallel to the blocking element rotation axis (50).

8. Machine tool device (10) according to one of the preceding claims, **characterized in that** the activation unit (20) has an operating element (22) which for activation is movable at least partially along the protective cover (16).

9. Machine tool device (10) according to Claim 8, **characterized in that** the operating element (22) is movable about an operating element rotation axis (24), wherein a movement of an activation element (26) of the clamping unit (12) parallel to the operating element rotation axis (24) is able to be generated by moving the operating element (22) about the operating element rotation axis (24)

10. Machine tool device (10) according to at least Claims 6 and 9, **characterized in that** the protective cover rotation axis (42) is disposed so as to be spaced apart from and parallel to the operating element rotation axis (24).

11. Machine tool device (10) according to at least Claims 4 and 9, **characterized in that** the blocking element rotation axis (50) is disposed so as to be spaced apart from and parallel to the operating element rotation axis (24).

12. Machine tool device (10) according to one of the preceding claims, **characterized in that** the protective cover (16) surrounds the locking unit (34) at least partially.

13. Machine tool (44), in particular a hand-held circular saw, having a machine tool device (10) according to one of the preceding claims.

14. System (46) with a tool (14), in particular a circular saw blade, and with a machine tool (44) according to Claim 13.

## Revendications

1. Dispositif (10) de machine-outil, en particulier dispositif de scie circulaire portative, avec une unité de serrage (12) pour fixer un outil (14), en particulier une lame de scie circulaire, avec un capot de protection (16), qui entoure au moins en partie une zone de réception (18) d'outil pour l'outil (14), et avec une unité d'actionnement (20) destinée à actionner l'unité de serrage (12), **caractérisé par** une unité de blocage (34) qui bloque l'unité d'actionnement (20) lorsque le capot de protection (16) est ouvert au moins en partie.

2. Dispositif (10) de machine-outil selon la revendication 1, **caractérisé en ce que** l'unité de blocage (34) comprend un élément de verrouillage (48), une fermeture du capot de protection (16) déplaçant l'élément de verrouillage (48) dans une position de déverrouillage.

3. Dispositif (10) de machine-outil selon la revendication 1 ou 2, **caractérisé en ce que** l'unité de blocage (34) comprend un élément de verrouillage (48) réalisé sous forme de tourillon, qui vient en prise avec l'unité d'actionnement (20) lorsque le capot de protection (16) est ouvert.

4. Dispositif (10) de machine-outil selon l'une des revendications précédentes, **caractérisé en ce que** l'unité de blocage (34) comprend un élément de verrouillage (48), qui peut être déplacé dans une position de déverrouillage ou dans une position de verrouillage par une rotation autour d'un axe de rotation (50) d'élément de verrouillage.

5. Dispositif (10) de machine-outil selon la revendication 4, **caractérisé en ce que** la rotation de l'élément de verrouillage (48) peut être générée par un mouvement d'au moins une partie du capot de protection (16).

6. Dispositif (10) de machine-outil selon l'une des revendications précédentes, **caractérisé en ce que** le capot de protection (16) comporte au moins une partie supérieure (38) de capot de protection et une partie inférieure (40) de capot de protection, qui est disposée de manière à pouvoir tourner autour d'un axe de rotation (42) de capot de protection par rapport à la partie supérieure (38) de capot de protection.

7. Dispositif (10) de machine-outil selon les revendications 4 et 6, **caractérisé en ce que** l'axe de rotation (42) de capot de protection est disposé à distance de et parallèlement à l'axe de rotation (50) d'élément de verrouillage.

8. Dispositif (10) de machine-outil selon l'une des revendications précédentes, **caractérisé en ce que** l'unité d'actionnement (20) comporte un élément d'utilisation (22) qui peut être déplacé au moins en partie le long du capot de protection (16) pour un actionnement.

9. Dispositif (10) de machine-outil selon la revendication 8, **caractérisé en ce que** l'élément d'utilisation (22) peut être déplacé autour d'un axe de rotation (24) d'élément d'actionnement, un mouvement d'un élément d'actionnement (26) de l'unité de serrage (12) s'étendant parallèlement à l'axe de rotation (24) d'élément d'actionnement pouvant être généré par un mouvement de l'élément d'utilisation (22) autour de l'axe de rotation (24) d'élément d'actionnement.

10. Dispositif (10) de machine-outil au moins selon les revendications 6 et 9, **caractérisé en ce que** l'axe de rotation (42) de capot de protection est disposé à distance de et parallèlement à l'axe de rotation (24) de l'élément d'utilisation.

11. Dispositif (10) de machine-outil au moins selon les revendications 4 et 9, **caractérisé en ce que** l'axe de rotation (50) d'élément de verrouillage est disposé à distance et parallèlement à l'axe de rotation (24) d'élément d'utilisation.

12. Dispositif (10) de machine-outil selon l'une des revendications précédentes, **caractérisé en ce que** le capot de protection (16) entoure au moins en partie l'unité de blocage (34).

13. Machine-outil (44), en particulier scie circulaire portative, avec un dispositif (10) de machine-outil selon l'une des revendications précédentes.

14. Système (46) avec un outil (14), en particulier une lame de scie circulaire, et avec une machine-outil (44) selon la revendication 13.
